# EUROPÄISCHE PATENTSCHRIFT

(11) **EP 3 515 876 B1**
(45) Veröffentlichungstag und Bekanntmachung des Hinweises auf die Patenterteilung: **15.04.2020**
(21) Anmeldenummer: 17768811.6
(22) Anmeldetag: 20.09.2017
(51) Int. Cl.: C04B 28/00, C04B 28/06, C04B 28/26, C04B 40/06, C04B 26/06, C09K 3/22

(54) **ZWEIKOMPONENTEN-MÖRTELMASSE UND DEREN VERWENDUNG**
DUAL COMPONENT MORTAR COMPOSITION AND ITS USE
MASSE DE MORTIER BICOMPOSANT ET SON UTILISATION

(30) Priorität: 26.09.2016 EP 16190553
(43) Veröffentlichungstag der Anmeldung: 31.07.2019
(73) Patentinhaber: HILTI Aktiengesellschaft, 9494 Schaan (LI)
(72) Erfinder: KUMRU, Memet-Emin, 86199 Augsburg (DE); BÜRGEL, Thomas, 86899 Landsberg (DE); LEITNER, Bernhard, 86899 Landsberg a. Lech (DE)
(74) Vertreter: Hilti Aktiengesellschaft Corporate Intellectual Property
(86) Internationale Anmeldenummer: PCT/EP2017/073705
(87) Internationale Veröffentlichungsnummer: WO 2018/054935

(56) Entgegenhaltungen:
- EP-A1- 0 432 087
- EP-A1- 0 495 336
- EP-A1- 0 589 831
- EP-A1- 2 829 525
- EP-A2- 0 455 582
- EP-A2- 2 314 556
- WO-A1-2011/072789
- WO-A1-2015/011180
- DE-A1-102012 221 446
- DE-A1-102014 013 799
- DE-A1-102015 113 352
- DE-B3-102010 051 818
- DE-B3-102011 077 248

## Beschreibung

Die Erfindung betrifft eine Zweikomponenten-Mörtelmasse mit einer Harzkomponente (A), die wenigstens ein radikalisch härtbares Harz umfasst, und einer Härterkomponente (B) für das Harz der Harzkomponente (A). Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in einen mineralischen Untergrund eingebracht sind.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Aus der EP 0 432 087 und der EP 0 589 831 sind Zweikomponenten-Mörtelmassen auf der Grundlage von Urethan(meth)acrylatharzen bekannt, die durch radikalische Polymerisation aushärten. DE 10 2015 113352 A1 offenbart eine Zweikomponenten-Mörtelmasse, wobei die Masse Aluminiumoxid und Kieselsäure allgemein aufweisen kann. EP 0 455 582 A2 und EP 0 495 336 beschreiben Mörtelsystem zur chemischen Befestigung ohne organische Harze.

Die im Stand der Technik bekannten und als chemische Verbunddübel eingesetzten Mörtelmassen auf der Grundlage von radikalisch härtenden Reaktionsharzen zeigen bereits gute Lastwerte in trockenen und feuchten Bohrlöchern. Allerdings führt der bei der Aushärtung der Reaktionsharze auftretende Polymerisationsschrumpf zu einer Abnahme des Mörtelvolumens. Dadurch kann es einer Leistungsabnahme des Verbunddübels kommen.

Gegenüber dem bekannten Stand der Technik besteht somit weiter Bedarf an Zweikomponenten-Mörtelmassen mit guter Haftung in Bohrlöchern, die einfach zu verarbeiten sind und die verbesserte mechanische Eigenschaften aufweisen.

Insbesondere besteht die Aufgabe, eine Mörtelmasse auf der Grundlage von radikalisch aushärtenden Reaktionsharzen bereitzustellen, die als chemischer Verbunddübel verwendet werden kann und die dauerhaft gute Lastwerte zeigt.

Es hat sich überraschenderweise gezeigt, dass diese Aufgabe durch eine Zweikomponenten-Mörtelmasse gemäß Anspruch 1 gelöst wird.

Bevorzugte Ausführungsformen der erfindungsgemäßen Mörtelmasse sind in den Unteransprüchen angegeben, die wahlweise miteinander kombiniert werden können.

Gegenstand der Erfindung ist ferner die Verwendung der Masse zur chemischen Befestigung von Bauteilen wie Ankergewindestangen, Bewehrungseisen, Gewindehülsen und Schrauben in Bohrlöchern, die in mineralischem Untergrund, vorzugsweise Beton, vorliegen.

In ihrer allgemeinen Form umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) und/oder die Härterkomponente (B) als weiteren Bestandteil mindestens einen anorganischen Zusatz enthält. Erfindungsgemäß umfasst der anorganische Zusatz ein Übergangsaluminiumoxid mit einer mittleren Teilchengröße d50 von mindestens 7,0 µm und einen Porendurchmesser in einem Bereich von 4,0 nm bis 30 nm.

Die Befestigung von Bauteilen unter Verwendung der erfindungsgemäßen Zweikomponenten-Mörtelmasse ergibt sowohl bei trockenen gereinigten Bohrlöchern als auch bei halbgereinigten und/oder feuchten Bohrlöchern hohe Lastwerte, die gegenüber herkömmlichen Massen deutlich erhöht sind und außerdem über lange Zeit stabil bleiben. Überraschenderweise führt die Verwendung von Übergangsaluminiumoxiden ab einer bestimmten mittleren Teilchengröße in Kombination mit einem Porendurchmesser in einem ausgewählten Bereich zu einer deutlichen Verringerung des Polymerisationsschrumpfes, der mit anderen Aluminiumoxiden wie Korund oder Füllstoffen mit hoher spezifischer Oberfläche wie porösen Kieselgelen nicht erreicht wird. Der Aushärteverlauf der Masse ändert sich nicht, wenn ein den Polymerisationsschrumpf reduzierendes Übergangsaluminiumoxid eingesetzt wird. Nur die Zeit bis zum Einsetzen der Aushärtung wird verkürzt.

Unter einer "Zweikomponenten-Mörtelmasse" wird im Sinne der Erfindung eine Mörtelmasse verstanden, die aus einer härtbaren Harzkomponente und einer Härterkomponente für die Harzkomponente besteht, wobei die Harzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktionsharz unmittelbar vor der Anwendung der Mörtelmasse wird die Aushärtung des Reaktionsharzes gestartet.

Übergangsaluminiumoxide sind solche Aluminiumoxide die nicht in der thermodynamisch stabilen Korundphase (α-Aluminiumoxid) vorliegen. Das α-Aluminiumoxid entsteht durch Erhitzen von Aluminiumhydroxiden wie Boehmit oder Bayerit auf hohe Temperaturen von über 1000°C. Bei niedrigeren Kalzinierungstemperaturen werden dagegen die sogenannten Übergangsaluminiumoxide gebildet, deren Kristallphase je nach Kalzinierungstemperatur und Startmaterial variieren kann. Die Übergangsaluminiumoxide weisen eine hohe Porosität und eine hohe spezifische Oberfläche auf. Zudem werden Übergangsaluminiumoxide auch als aktiv bezeichnet, da sie katalytische Eigenschaften besitzen und durch Chemisorption Moleküle adsorbieren können.

Unter der mittleren Teilchengröße d50 wird der Median der Teilchengrößenverteilung verstanden, bei dem 50% aller Teilchen in der untersuchten Probe kleiner als der angegebene d50-Wert sind.

Mit "Porendurchmesser" wird der durch Stickstoffadsorption und -desoprtion ermittelte häufigste Porendurchmesser in der Probe bezeichnet.

Bevorzugt umfasst der anorganische Zusatz wenigstens ein Übergangsaluminiumoxid sowie weitere Stoffe, die aus der aus anorganischen Füllstoffen, hydraulisch abbindenden oder polykondensierbaren anorganischen Verbindungen, Modifikatoren und Mischungen davon bestehenden Gruppe ausgewählt sind.

Besonders bevorzugt umfasst der anorganische Zusatz einen Füllstoff, der in der Harzkomponente (A) und/oder in der Härterkomponente (B) enthalten sein kann. Beispiele für geeignete Füllstoffe sind Quarz, Glas, Korund, Porzellan, Steingut, Schwerspat, Leichtspat, Gips, Talkum und/oder Kreide sowie deren Mischungen in Form von Sanden, Mehlen oder Formkörpern, vorzugsweise in Form von Fasern oder Kugeln.

Gemäß einer weiter bevorzugten Ausführungsform der Erfindung umfasst der anorganische Zusatz ferner eine hydraulisch abbindende oder polykondensierbare anorganische Verbindung, wie Zement und/oder Gips, vorzugsweise Eisenoxidfreien oder Eisenoxid-armen Zement wie Aluminat-Zement. Die hydraulisch abbindende oder polykondensierbare anorganische Verbindung ist vorzugsweise in der Harzkomponente (A) enthalten. Die Härterkomponente (B) umfasst in diesem Fall neben dem Härtungsmittel und dem für die Phlegmatisierung des Härtungsmittels wahlweise enthaltenen Wassers noch zusätzliches Wasser für das Aushärten der hydraulisch abbindenden oder polykondensierbaren anorganischen Verbindung.

Schließlich kann der anorganische Zusatz in der Harzkomponente (A) und/oder in der Härterkomponente (B) noch weitere anorganische Modifikatoren wie Verdicker, Verflüssiger und Thixotropiermittel enthalten, beispielsweise gefällte oder pyrogene Kieselsäure, Bentonite und/oder Kaolin.

Gemäß einer bevorzugten Ausführungsform liegt das Übergangsaluminiumoxid in der Mörtelmasse in einem Anteil von 0,5 bis 10 Volumenprozent vor, bevorzugt von 1 bis 8 Volumenprozent. Mit Anteilen des Übergangsaluminiumoxids von unter 0,5 Volumenprozent wird keine merkliche Verringerung des Polymerisationsschrumpfes erzielt. Bei Anteilen von über 10 Volumenprozent des Übergangsaluminiumoxids kann der Polymerisationsschrumpf der Mörtelmasse wieder zunehmen und die Verarbeitung der Masse erschwert sein.

Die mittlere Teilchengröße d50 des Übergangsaluminiumoxids beträgt vorzugsweise mindestens 12,0 µm, bevorzugt mindestens 14,0 µm, weiter bevorzugt mindestens 25,0 µm und besonders bevorzugt mindestens 35 µm. Durch Verwendung von Übergangsaluminiumoxiden mit den angegebenen mittleren Teilchengrößen d50 kann der Polymerisationsschrumpf der Mörtelmasse auf unter 3 %, bevorzugt unter 2,5 %, weiter bevorzugt auf unter 2 %, oder sogar auf unter 1 % reduziert werden. Der Polymerisationsschrumpf bezeichnet hier und im Folgenden die prozentuale Dickenänderung eines Mörtelbetts vor und nach der Aushärtung. Eine weitere Erhöhung der mittleren Teilchengröße scheint den Polymerisationsschrumpf nicht mehr wesentlich zu beeinflussen. Die Obergrenze der mittleren Teilchengröße d50 kann daher unter dem Gesichtspunkt der Fließfähigkeit und der Verarbeitung der Mörtelmasse frei gewählt werden.

Vorzugsweise werden Übergangsaluminiumoxide mit einer mittleren Teilchengröße d50 von bis zu 120 µm verwendet.

Gemäß einer weiteren bevorzugten Ausführungsform weist das in der erfindungsgemäßen Mörtelmasse verwendete Übergangsaluminiumoxid einen Porendurchmesser in einem Bereich von 4 nm bis 15 nm auf. Nicht poröses α-Aluminiumoxid zeigt keine Reduktion des Polymerisationsschrumpfes. Übergangsaluminiumoxide mit Porendurchmesser über 30 nm zeigen ebenfalls eine weniger starke Reduktion des Polymerisationsschrumpfes als solche mit vergleichbarer mittlerer Teilchengröße d50 aber kleinerem Porendurchmesser.

Die anorganischen Zusätze, einschließlich des Übergangsaluminiumoxids können in der Mörtelmasse in einem Anteil von 50 bis 80 Gewichtsprozent vorliegen, bezogen auf das Gesamtgewicht der Masse. Bei Anteilen der anorganischen Zusätze von über 80 Gewichtsprozent lassen sich die Massen nicht mehr sicher verarbeiten, da wegen der hohen Viskosität der hochgefüllten Massen keine homogene Vermischung mehr erreicht werden kann. Niedriggefüllte Massen können zwar grundsätzlich verwendet, werden, sind aber weniger bevorzugt.

Das radikalisch härtbare Harz in der Komponente (A) der Mörtelmasse umfasst bevorzugt ein Urethan(meth)acrylatharz und/oder ein (meth)acrylatmodifiziertes Epoxidharz.

Zur Herstellung eines geeigneten Urethan(meth)acrylatharzes kann ein mindestens difunktionelles Isocyanat mit einer oder mehreren hydroxyfunktionellen, ethylenisch ungesättigten Verbindungen umgesetzt werden, insbesondere mit hydroxyfunktionellen (Meth)acrylverbindungen.

Das mindestens difunktionelle Isocyanat zur Herstellung des Urethan(meth)acrylatharzes kann ein aromatisches Isocyanat, ein aliphatisches Isocyanat, insbesondere ein cycloaliphatisches Isocyanat und ein Isocyanatgruppen enthaltendes Präpolymer sein, die auch im Gemisch miteinander eingesetzt werden können.

Beispiele für geeignete aliphatische und aromatische Isocyanate umfassen m-Phenylendiisocyanat, Toluylen-2-4-diisocyanat, Toluylen-2-6-diisocyanat, Hexamethylen-1,6-diisocyanat, Tetramethylen-1,4-diisocyanat, Cyclohexan-1,4-diisocyanat, Hexahydrotoluylendiisocyanat, Naphthylen-1,5-diisocyanat, Methoxyphenyl-2,4-diisocyanat, Diphenylmethan-4,4'-diisocyanat, 4,4'-biphenylendiisocyanat, 3,3'-Dimethoxy-4,4'-biphenyldiisocyanat, 3,3'-Dimethyl-4,4'-biphenyldiisocyanat, 3,3'-Dimethyldiphenylmethan-4,4'-diisocyanat, 4,4',4"-Triphenylmethantriisocyanat, Polymethylenpolyphenylisocyanat (PMDI), Toluylen-2,4,6-triisocyanat und 4,4'-Dimethyldiphenylmethan-2,2',5,5'-tetraisocyanat.

Diphenylmethan-4,4'-diisocyanat, Diphenylmethan-2,4'-diisocyanat und Mischungen davon werden gemeinsam als MDI bezeichnet, und alle können verwendet werden. Toluylen-2,4-diisocyanat, Toluylen-2,6-diisocyanat und Mischungen davon werden allgemein als TDI bezeichnet, und können ebenfalls alle verwendet werden.

Bevorzugt ist das Polyisocyanat aus der aus Diphenylmethandiisocyanat (MDI), polymerem Diphenylmethandiisocyanat (PMDI), Toluylendiisocyanat (TDI), Hexandiisocyanat (HDI), Isophorondiisocyanat (IPDI) und Mischungen davon bestehenden Gruppe ausgewählt.

Isocyanat-Präpolymere, die durch Reaktion eines stöchiometrischen Überschusses eines beliebigen Polyisocyanats mit einer isocyanatreaktiven Verbindung als Kettenverlängerer hergestellt werden, können ebenfalls verwendet werden, wahlweise im Gemisch mit den oben genannten aromatischen und aliphatischen Isocyanaten.

Beispiele für derartige Kettenverlängerer sind zweiwertige Alkohole wie Ethandiol, Diethylenglycol, Triethylenglycol und Polyethylenglycol, Propandiol, Dipropylenglycol, Tripropylenglycol und Polypropylenglycol, 1,4-Butandiol, 1,6-Hexandiol, Neopentylglycol und Diethanolamin, weiter aromatische Alkohole wie Bisphenol-A und Bisphenol-F oder deren Ethoxylierungsprodukte, Hydrierungsprodukte und/oder Halogenierungsprodukte, höherwertige Alkohole wie Glycerin, Trimethylolpropan, Hexantriol und Pentaerythrit, hydroxylgruppenhaltige Polyether wie beispielsweise Oligomere aliphatischer oder aromatischer Oxirane und/oder höherer cyclischer Ether, beispielsweise von Ethylenoxid, Propylenoxid, Styroloxid und Furan, Polyether, die in der Hauptkette aromatische Struktureinheiten enthalten, wie beispielsweise die Polyether des Bisphenol A und F, sowie hydroxylgruppenhaltige Polyester auf Basis der obengenannten Alkohole und Polyether mit Dicarbonsäuren oder ihrer Anhydride wie Adipinsäure, Phthalsäure, Tetra- oder Hexahydrophthalsäure, Hetsäure, Maleinsäure, Fumarsäure, Itaconsäure und Sebacinsäure.

Kettenverlängerer mit aromatischen Struktureinheiten dienen zur Kettenversteifung des Harzes. Hydroxylverbindungen mit ungesättigten Struktureinheiten wie Fumarsäure können zur Erhöhung der Vernetzungsdichte während der Aushärtung herangezogen werden. Verzweigte oder sternförmige Hydroxylverbindungen als Kettenverlängerer, insbesondere drei- und höherwertige Alkohole sowie Polyether und/oder Polyester, die deren Struktureinheiten enthalten, ergeben verzweigte oder sternförmige Urethan(meth)acrylate, die eine niedrigere Viskosität der Harze und eine verbesserte Löslichkeit in Reaktivverdünnern aufweisen.

Die hydroxyfunktionelle (Meth)acrylverbindung zur Herstellung des Urethan(meth)acrylatharzes der Harzkomponente (A) ist vorzugweise ein (Meth)acrylsäurehydroxyalkylester, wie Hydroxyethyl(meth)acrylat, Hydroxypropyl(meth)acrylat, Polyoxyethylen(meth)acrylat, Polyoxypropylen(meth)acrylat, oder ein hydroxylgruppenhaltiger (Meth)acrylsäureester von mehrwertigen Alkoholen wie Pentaerythrittri(meth)acrylat, Glyceroldi(meth)acrylat, Trimethylolpropandi(meth)acrylat und Neopentylglycolmono(meth)acrylat.

Die hier und im Folgenden verwendete Bezeichnung "(Meth)acryl..." oder "...(meth)acryl..." bedeutet, dass von dieser Bezeichnung sowohl die Acrylgruppe als auch die Methacrylgruppe umfasst sein soll.

Die Umsetzung des mindestens difunktionellen Isocyanats mit der hydroxyfunktionellen, ethylenisch ungesättigten Verbindung erfolgt derart, dass das so erhaltene radikalisch polymerisierbare Harz der Harzkomponente (A) im Wesentlichen frei von freien Isocyanatgruppen ist. Im Wesentlichen frei bedeutet hier, dass das Harz einen NCO-Gehalt von weniger als 2% aufweist, vorzugsweise weniger als 1% und besonders bevorzugt weniger als 0,3%. Dazu wird die hydroxyfunktionelle, ethylenisch ungesättigte Verbindung in einem stöchiometrischen Überschuss über die Isocyanatgruppen eingesetzt.

Als weitere radikalisch polymerisierbare Harze können beispielsweise Vinylester, Epoxy(meth)acrylate, ungesättigte Polyesterharze und Mischungen davon eingesetzt werden, allein oder auch zusammen mit dem oben beschriebenen (Poly)urethan(meth)acrylat.

Ungesättigte Polyesterharze werden durch Umsetzung von ungesättigten Dicarbonsäuren wie o- und/oder iso-Phthalsäure, Maleinsäure und Fumarsäure mit Dialkoholen erhalten.

Als Epoxy(meth)acrylate werden üblicherweise Kondensate von (Meth)acylsäure mit Glycidylethern von Bisphenol-A, Bisphenol-F oder Novolaken eingesetzt.

Das radikalisch polymerisierbare Harz liegt vorzugsweise in einem Anteil von 10 bis 35 Gewichtsprozent in der Mörtelmasse vor.

Gemäß einer bevorzugten Ausführungsform der Erfindung enthält die Harzkomponente (A) in allen oben beschriebenen Ausführungsformen als weiteren Bestandteil mindestens einen Reaktivverdünner, der wenigstens eine ethylenisch ungesättigte Gruppe aufweist. Geeignete Reaktivverdünner sind insbesondere (Meth)acrylatverbindungen sowie Allyl- und Vinylverbindungen.

Geeignete Reaktivverdünner sind in der EP 1 935 860 A1 und der DE 195 31 649 A1 beschrieben. Vorzugsweise enthält die Harzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: Hydroxypropyl(meth)acrylat, 1,2-Ethandioldi-(meth)acrylat, 1,3-Propandioldi(meth)acrylat, 1,2-Butandioldi(meth)acrylat, 1,4-Butandioldi(meth)acrylat (BDDMA), Trimethylolpropantri(meth)acrylat, Phenethyl-(meth)acrylat, Tetrahydrofurfuryl(meth)acrylat, Ethyltriglykol(meth)acrylat, *N,N-*Dimethylaminoethyl(meth)acrylat, *N,N*-Dimethylaminomethyl(meth)acrylat, Acetoacetoxyethyl(meth)acrylat, Isobornyl(meth)acrylat, 2-Ethylhexyl(meth)-acrylat, Diethylenglykoldi(meth)acrylat, Methoxypolyethylenglykolmono-(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)-acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat; PEG-di(meth)acrylate, wie PEG200-di(meth)acrylat, Tetraethylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert-*Butyl(meth)acrylat und Norbornyl(meth)acrylat.

Grundsätzlich können auch andere übliche, radikalisch polymerisierbare Verbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen, wobei die nicht kennzeichnungspflichtigen Vertreter davon bevorzugt sind.

Besonders bevorzugte Reaktivverdünner sind Hydroxypropyl(meth)acrylat, 1,4-Butandioldi(meth)acrylat und Butandiol-1,2-di(meth)acrylat.

Der Reaktivverdünner dient zum einen als Lösungsmittel für das radikalisch polymerisierbare Harz und zum anderen als ein Comonomer, das an der radikalischen Polymerisation der Harzkomponente teilnimmt. Die Verwendung von Reaktivverdünnern führt zu einer weiteren Verbesserung der Haftung der ausgehärteten Mörtelmasse an den Oberflächen des mineralischen Untergrunds und/oder des zu befestigenden Bauteils.

Der Reaktivverdünner liegt in der Mörtelmasse bevorzugt in einem Anteil von 0 bis 25 Gewichtsprozent vor, besonders bevorzugt 4 bis 25 Gewichtsprozent. Alle radikalisch polymerisierbaren Verbindungen liegen in der Mörtelmasse bevorzugt in einem Anteil von bis zu höchstens 50 Gewichtsprozent vor. Das Gewichtsverhältnis von Reaktivverdünner zu radikalisch härtbarem Harz kann vorzugsweise in einem Bereich von 2:1 bis 1:5, bevorzugt 2:1 bis 1:2 liegen.

Gemäß einer weiter bevorzugten Ausführungsform der Erfindung enthält die Harzkomponente (A) wenigstens einen Beschleuniger für das Härtungsmittel. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, *tert*-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxyethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind zum Beispiel Cobaltoctoat oder Cobaltnaphthenoat sowie Vanadium-, Kalium-, Kalzium-, Kupfer-, Mangan- oder Zirkoniumcarboxylate.

Die Harzmischung kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Beschleuniger und/oder Co-Beschleuniger sind vorzugsweise in einem Anteil von 0 bis 3 Gewichtsprozent, bevorzugt 0,01 - 2 Gew.-%, in der Mörtelmasse enthalten.

Weiterhin kann die Harzkomponente (A) einen oder mehrere der üblichen Polymerisationsinhibitoren zur Stabilisierung der Harzmischungen gegen vorzeitige Polymerisation und zur Einstellung der Gelzeit enthalten, vorzugsweisen in einem Anteil von 0 bis 0,5 Gewichtsprozent, bezogen auf das Gesamtgewicht der Mörtelmasse. Als Polymerisationsinhibitoren sind die für radikalisch polymerisierbare Verbindungen üblicherweise verwendeten Polymerisationsinhibitoren geeignet, wie sie dem Fachmann bekannt sind.

Bevorzugt umfasst die Mörtelmasse, insbesondere die Harzkomponente (A), mindestens einen Polymerisationsinhibitor aus der Gruppe der phenolischen Verbindungen sowie wahlweise nicht-phenolische Verbindungen, wie stabile Radikale und/oder Phenothiazine.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert-*butylphenol, 2,6-Di-*tert*-butylphenol, 2,4,6-Trimethylphenol, 2,4,6-Tris(dimethylaminomethyl)phenol, 4,4'-Thio-bis(3-methyl-6-*tert*-butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)benzol, 2,2'-Methylen-di-*p-*cresol, Brenzkatechin und Butylbrenzkatechine, wie 4-*tert*-Butylbrenzkatechin, 4,6-Di-*tert*-butylbrenzkatechin, Hydrochinone, wie Hydrochinon, 2-Methylhydrochinon, 2-*tert*-Butylhydrochinon, 2,5-Di-*tert*-butylhydrochinon, 2,6-Di-*tert*-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und *N*-Oxyl-Radikale in Betracht.

Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-*O*-(benzyloxycarbonyl)oxim und dergleichen. Ferner können in para-Position zur Hydroxylgruppe substituierte Pyrimidinol- oder Pyridinol-Verbindungen als Polymerisationsinhibitoren verwendet werden, wie sie in der DE 10 2011 077 248 B1 beschrieben sind.

Die Polymerisationsinhibitoren können, abhängig von den gewünschten Eigenschaften und der Verwendung der Harzmischung, entweder alleine oder als Kombination von zweien oder mehreren davon verwendet werden.

Gemäß einer besonderen Ausführungsform umfasst die Mörtelmasse einen phenolischen Polymerisationsinhibitor, der eine Bindung mit dem Übergangsaluminiumoxid eingehen und somit durch eine Wechselwirkung mit den in der Mörtelmasse eingesetzten Übergangsaluminiumoxiden eine Reduktion des Polymerisationsschrumpfes begünstigen kann.

Die Fähigkeit der phenolischen Verbindung zur Bindung an das Übergangsaluminiumoxid kann durch eine HPLC-Untersuchung festgestellt werden. Dazu wird die phenolische Verbindung unter Bildung einer 0,5%igen Lösung (w/w) in 1,4-Butandiol-dimethacrylat (BDDMA) gelöst. Ein Teil dieser Lösung dient als Referenzprobe für die HPLC-Messung. 25 g der Lösung werden mit 6 g des zu untersuchenden Aluminiumoxids versetzt, im Speedmixer gemischt und 1 Stunde stehen gelassen. Danach werden annähernd gleiche Mengen des Überstands und der Referenzprobe in etwa 1 ml Acetonitril aufgenommen und an einer HPLC-Säule (Reprosil-PurTM C-18 AQ, 5µm) mit Wasser/Acetonitril als Eluent getrennt. Die so erhaltenen Chromatogramme werden auf den BDDMA-Peak normiert. Die phenolische Verbindung ist zur Bindung mit dem Übergangsaluminiumoxid befähigt, wenn die maximale Peakhöhe der phenolischen Verbindung im Chromatogramm der untersuchten Probe höchstens 20 %, vorzugsweise höchstens 10 % der maximalen Peakhöhe in der Referenzprobe beträgt.

Bevorzugte phenolische Polymerisationsinhibitoren, die eine Bindung mit Übergangsaluminiumoxiden eingehen können, sind insbesondere sterisch nicht gehinderte Phenole mit zwei oder mehr Hydroxygruppen, besonders bevorzugt Hydrochinon, substituierte Hydrochinone, z.B. 4-Methoxyphenol, Benzochinon und Brenzkatechin sowie deren Derivate wie *tert*-Butylbrenzkatechin, 4-Methylbrenzkatechin, 3,5-Ditertbutylbrenzkatechin, und 3,4-Dihydroxybenzaldehyd.

Ganz besonders bevorzugt werden die vorgenannten phenolischen Polymerisationsinhibitoren zusammen mit Nitroxylverbindungen, insbesondere mit stabilen Nitroxylradikalen, auch N-Oxyl-Radikale genannt, zur Stabilisierung der Mörtelmasse eingesetzt. Bevorzugt sind N-Oxyl-Radikale wie Piperidinyl-N-oxyl oder Tetrahydropyrrol-N-oxyl, wie sie in der DE 19531649 A1 beschrieben sind.

Besonders bevorzugt wird 4-Hydroxy-2,2,6,6-tetramethylpiperidin-N-oxyl (im Folgenden als Tempol bezeichnet) als zusätzlicher Polymerisationsinhibitor zur Stabilisierung der Mörtelmasse verwendet.

Schließlich kann die Mörtelmasse noch weitere organische Zusätze wie Haftverbesserer auf der Grundlage von Silanverbindungen enthalten, wie sie dem Fachmann beispielsweise aus der EP 2 371 782 A2 und der WO 2011/072789 A1 bekannt sind.

Das in der Härterkomponente (B) der erfindungsgemäßen Zweikomponenten-Mörtelmasse enthaltene Härtungsmittel für das radikalisch polymerisierbare Harz der Harzkomponente (A) umfasst vorzugsweise mindestens ein organisches Peroxid, beispielsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat.

Die organischen Peroxide sind vorzugsweise phlegmatisiert, insbesondere durch Zusatz von Wasser als Phlegmatisierungsmittel und/oder Lösungsmittel. Geeignete Härterkomponenten sind dem Fachmann bekannt und auf dem Markt erhältlich.

Zur Einstellung einer geeigneten Viskosität kann die Härterkomponente (B) einen Anteil an weiteren anorganischen Füllstoffen und Modifikatoren wie Thixotropiermittel enthalten.

Erfindungsgemäß bevorzugt ist die Verwendung einer wasserfreien Härterkomponente, in der die Härtungsmittel durch inerte Füllstoffe phlegmatisiert sind. Derartige Härterkomponenten sind beispielsweise unter dem Handelsnamen Perkadox™ von Akzo Nobel erhältlich. Die Verwendung einer wasserfreien Härterkomponente trägt dazu bei, dass die synergistische Wechselwirkung zwischen dem Einsatz der Übergangsaluminiumoxide und Brenzkatechin oder Brenzkatechinderivaten als Polymerisationsinhibitoren noch verstärkt wird, so dass der Polymerisationsschrumpf der Mörtelmasse schon mit geringen Anteilen der Übergangsaluminiumoxide weiter reduziert werden kann.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Die Harzkomponente (A) der erfindungsgemäßen Zweikomponenten-Mörtelmasse kann bevorzugt die folgende Zusammensetzung aufweisen:
ein radikalisch härtbares Harz in einem Anteil von 5 bis 45 Gew.-%;
einen Reaktivverdünner in einem Anteil von 0 bis 25 Gew.-%;
einen Beschleuniger in einem Anteil von 0 bis 3 Gew.-%;
einen Polymerisationsinhibitor in einem Anteil von 0 bis 5 Gew.-%; und
wenigstens einen anorganischen Zusatz in einem Anteil von 50 bis 80 Gew.-%;
wobei die Summe aller Anteile 100 Gewichtsprozent ergibt, und wobei der anorganische Zusatz wenigstens ein Übergangsaluminiumoxid mit einer mittleren Teilchengröße d50 von mindestens 7 µm umfasst.

Das Übergangsaluminiumoxid weist bevorzugt eine mittlere Teilchengröße von mindestens 12 µm auf, weiter bevorzugt von mindestens 14 µm oder mindestens 25 µm und besonders bevorzugt von mindestens 35 µm, wobei die Obergrenze der mittleren Teilchengröße bevorzugt bis zu 120 µm betragen kann.

Der mittlere Porendurchmesser des Übergangsaluminiumoxids liegt erfindungsgemäß in einem Bereich von 4 nm bis 30 nm, bevorzugt von 4,5 nm bis 20 nm, besonders bevorzugt von 4,5 nm bis 15 nm.

Der Anteil des Übergangsaluminiumoxids in der Harzkomponente (A) liegt vorzugsweise in einem Bereich von 0,5 bis 20 Gewichtsprozent, bevorzugt von 1 bis 10 Gewichtsprozent.

Die Härterkomponente (B) umfasst bevorzugt das Härtungsmittel in einem Anteil von 10 bis 25 Gewichtsprozent, Füllstoffe und Modifikatoren in einem Anteil von 45 bis 90 Gewichtsprozent sowie Wasser in einem Anteil von 0 bis 30 Gewichtsprozent.

Zur Anwendung der Mörtelmasse werden die Harzkomponente (A) und die Härterkomponente (B) miteinander gemischt, wobei das Gewichtsverhältnis der Harzkomponente (A) zur Härterkomponente (B) so gewählt wird, dass die Harzkomponente nach dem Vermischen mit der Härterkomponente zuverlässig aushärtet. Über den Anteil der Polymerisationsinhibitoren in der Harzkomponente (A) und der Phlegmatisierungsmittel in der Härterkomponente (B) kann die Gelzeit der Mischung und damit die zur Verarbeitung der gemischten Masse verfügbare Zeit eingestellt werden. Bevorzugt liegt das Gewichtsverhältnis der Harzkomponente (A) zur Härterkomponente (B) in einem Bereich von 4:1 bis 7:1, und das Gewichtsverhältnis von radikalisch härtbarem Harz mit Reaktivverdünner zu Härtungsmittel liegt in einem Bereich von 10:1 bis 15:1.

Die erfindungsgemäßen Zweikomponenten-Mörtelmassen können vorteilhaft die nachfolgende Gesamtzusammensetzung aus Harzkomponente (A) und Härterkomponente (B) aufweisen:
radikalisch härtbares Harz in einem Anteil von 5 bis 50 Gew.-%;
Reaktivverdünner in einem Anteil von 0 bis 25 Gew.-%;
organisches Peroxid in einem Anteil von 0,5 bis 5 Gew.-%;
Polymerisationsbeschleuniger in einem Anteil von 0 bis 0,5 Gew.-%;
wenigstens ein Übergangsaluminiumoxid in einem Anteil von 2 bis 20 Gewichtsprozent;
weitere anorganische Zusätze in einem Anteil von 10 bis 78 Gew.-%; und
Wasser in einem Anteil von 0 bis 10 Gew.-%.

Die Summe aller Anteile der Masse ergibt 100 Gewichtsprozent.

Erfindungsgemäß weist das Übergangsaluminiumoxid eine mittlere Teilchengröße d50 von mindestens 7 µm auf, bevorzugt von mindestens 12 µm, weiter bevorzugt von mindestens 14 µm oder mindestens 25 µm und besonders bevorzugt von mindestens 35 µm. Der mittlere Porendurchmesser des Übergangsaluminiumoxids liegt erfindungsgemäß in einem Bereich von 4 nm bis 30 nm, bevorzugt von 4,5 nm bis 20 nm, besonders bevorzugt von 4,5 nm bis 15 nm.

Der Anteil des Übergangsaluminiumoxids in der Mörtelmasse liegt vorzugsweise in einem Bereich von 0,5 bis 15 Gewichtsprozent, bevorzugt von 1 bis 10 Gewichtsprozent.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer, einem Speedmixer oder einem Dissolver, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Das Härtungsmittel der Härterkomponente (B) initiiert die radikalische Polymerisation der Harzkomponente (A), sodass die Mörtelmasse unter Umgebungsbedingungen innerhalb weniger Stunden aushärtet.

Gegenstand der Erfindung ist daher auch die Verwendung der erfindungsgemäßen Zweikomponenten-Mörtelmasse zur chemischen Befestigung von Bauteilen, insbesondere Ankergewindestangen, Bewehrungseisen, Gewindehülsen und Schrauben, in Bohrlöchern, die in einem mineralischen Untergrund, vorzugsweise Beton, vorliegen.

Weitere Vorteile der Erfindung ergeben sich aus der folgenden Beschreibung bevorzugter Ausführungsformen mit Bezug auf die beigefügten Zeichnungen. In den Zeichnungen zeigen:
- Figur 1 ein Diagramm mit einer Darstellung des Polymerisationsschrumpfes in Abhängigkeit von der mittleren Teilchengröße der Übergangsaluminiumoxide;
- Figur 2 ein Diagramm mit einer Darstellung der in einem Stahlhülsentest ermittelten Verbundspannung von Mörtelmassen in Abhängigkeit von der Hinterschnitttiefe der Stahlhülse.

### Untersuchung der verwendeten Aluminiumoxide

### Kristallphase

Die Kristallphase der eingesetzten Aluminiumoxide wurde mittels Röntgendiffraktometrie bestimmt. Die Röntgenstrahlung wurde mit einer Cu-Röntgenröhre erzeugt. Die benötigten Strukturmodelle zur qualitativen und quantitativen Analyse der Kristallphasen wurden aus der PDF-Kartei (Powder Diffraction File) und der ICSD-Kartei (Inorganic Crystal Structure Database) entnommen.

### Teilchengröße

Die Teilchengrößenanalyse wurde mit dem Gerät LS 13320 der Firma Beckman Coulter unter Verwendung einer Laserdiffraktometrie durchgeführt. Der erfassbare Teilchengrößenbereich des verwendeten Messgeräts lag bei 0,017 µm bis 2000 µm. Für die Messungen wurden die Proben mit VE-Wasser aufgeschlämmt und für 30 Sekunden mit Ultraschall behandelt. Ein Teil der Suspension wurde dann in die Messzelle des Geräts eingebracht. Für die Ermittlung der d5-, d50- und d95-Werte wurde die Volumenverteilung verwendet. Der für die Auswertung verwendete d50-Wert beschreibt den Median einer Verteilung. Dies bedeutet, dass 50 Volumen% der Teilchen in der Probe kleiner sind als die Teilchengröße, die der d50-Wert angibt

### Spezifische Oberfläche und Porenanalyse

Die spezifische Oberfläche nach BET und die Porengrößen der untersuchten Proben wurden mit dem NOVAtouch™ LX4 Gerät der Firma Quantachrome ermittelt. Als Messgas zur Bestimmung der Sorptionsisothermen wurde Stickstoff verwendet. Die Porengrößenverteilung wurde nach der Methode von Barret, Joyner und Halenda bestimmt (BJH-Methode). Aus dem Desorptionsast der Isotherme kann danach die Porengrößenverteilung der Proben berechnet werden. Als Kennwert der Verteilung wurde der häufigste Porendurchmesser des Desorptionats der Probe festgelegt. Unter "Porendurchmesser" wird somit der häufigste Porendurchmesser der Probe verstanden.

### Untersuchungen der Mörtelmasse

### Polymerisationsschrumpf

Das Schrumpfverhalten der Mörtelmassen wird durch Messung der linearen Dickenänderung eines Mörtelbetts mittels eines Laserstrahls beim Aushärten bestimmt. Zur Durchführung der Messung werden 2,5 g der in einem Speedmixer bei 1000 U/min 10 Sekunden lang gemischten Mörtelmasse mit einem Spatel auf eine Stahlplatte aufgebracht, die links und rechts von 2,5 mm hohen Abstandshaltern begrenzt ist. Auf den Mörtel wird ein 0,5 mm dickes Stahlplättchen als Reflektor aufgelegt. Mit einer weiteren Stahlplatte wird der Mörtel mitsamt der Reflektorplatte auf eine Höhe von 2,5 mm plattgedrückt. Die Dicke des Mörtelbetts beträgt somit genau 2 mm. Für die Messung wird die obere Stahlplatte wieder entfernt, und die Dickenänderung des Mörtelbetts während und nach der Aushärtung wird durch Reflexion eines Laserstrahls an der Reflektorplatte bestimmt. Es werden mindestens 5 Messungen durchgeführt und ein Mittelwert gebildet. Der Polymerisationsschrumpf gibt die prozentuale Änderung der Dicke des ausgehärteten Mörtelbetts an, bezogen auf die Dicke des Mörtelbetts vor der Aushärtung.

Die für den Polymerisationsschrumpf ermittelten Werte werden mit Bezug auf die erzielte Schrumpfreduktion im Vergleich zu einer Mörtelmasse ohne Übergangsaluminiumoxide bewertet und in folgende Gruppen eingeteilt:

| | |
|---|---|
| Sehr ausgeprägt: | Polymerisationsschrumpf < 1,0 % |
| Ausgeprägt: | Polymerisationsschrumpf 1,0 % bis 2,3 % |
| Leicht: | Polymerisationsschrumpf 2,3 % bis 3,1 % |
| Nein: | Polymerisationsschrumpf > 3,1 % |

### Polymerisationskinetik

Zur Ermittlung von Enthalpie und Geschwindigkeit der Polymerisationsreaktion wurden DSC-Messungen mit Messgeräten der Firma Mettler-Toledo durchgeführt. Für die DSC-Messungen wurden etwa 100 mg Mörtelmasse in einen Korund-Tiegel eingebracht, die Polymerisationsreaktion wurde isotherm bei 21 °C verfolgt. Als Referenztiegel wurde ebenfalls ein Korund-Tiegel verwendet. Durch die exotherme Reaktion wurde ein deutlicher Peak im DSC-Kurvenverlauf sichtbar, aus dem die Enthalpie pro Gramm eingesetzte Mörtelmasse bestimmt wurde. Zudem wurde die Geschwindigkeit der Reaktion anhand der Wendesteigung der Umsatzkurve der Reaktion festgestellt.

### Verbundspannung

Zur Bestimmung der mit Zweikomponenten-Mörtelmassen erzielten Verbundspannung wird der gemischte Mörtel in eine Stahlhülse mit definierter Geometrie und definierter Füllhöhe des Mörtels (Einbindetiefe) eingebracht, Anschließend wird eine Ankerstange mittels einer Zentrierhilfe mittig in der mit Mörtel gefüllten Stahlhülse platziert. Nach Aushärtung des Mörtels bei Raumtemperatur und für mindestens 12 Stunden wird die Probe mit Hilfe eines Gewindeadapters in eine Zugprüfmaschine eingeschraubt (Fabrikat: Zwick Roell Z050, 50 kN). Die Probe wird mit Zugkraft bei definierter Geschwindigkeit bis zum Versagen belastet. Die entsprechende Kraft-Weg-Abhängigkeit wird kontinuierlich registriert. Es werden jeweils fünf Einzelmessungen durchgeführt und der Mittelwert der maximalen Kraft beim Versagen berechnet.

Zur Durchführung der Messungen wurden Ankerstangen mit Gewinde M8 und Stahlhülsen mit folgender Geometrie verwendet:

| | |
|---|---|
| Hinterschnitttiefe: | 0,35+/-0,02 mm |
| Hinterschnittbreite: | 3mm |
| Einbindetiefe: | 36mm |
| Innendurchmesser: | 14 mm |

Die aus diesen Messungen ermittelte Verbundspannung ist definiert als der Quotient aus maximaler Kraft beim Versagen und der Scherfläche der verwendeten Ankerstange (Ankerstange M8: 904,3 mm²).

### Ausführungsbeispiele

Die Erfindung wird nachfolgend anhand von bevorzugten Ausführungsbeispielen beschrieben, die jedoch keiner Weise einschränkend zu verstehen sind.

### Zweikomponenten-Mörtelmasse auf Basis eines Urethanmethacrylatharzes

### Beispiel 1 (Vergleich)

Man bereitet zunächst die Harzkomponente (A) einer Zweikomponenten-Mörtelmasse dadurch, dass man 34,5 g einer Acrylatharzmischung mit 44,2 g eines Quarzsandes, 18,5 g eines Aluminat-Zements und 2,8 g einer hydrophoben pyrogenen Kieselsäure als Thixotropiermittel im Dissolver unter Vakuum zu einer luftblasenfreien pastösen Masse homogenisiert. Die Zusammensetzung der Acrylatharzmischung ist in der folgenden Tabelle 1 angegeben. Die auf diese Weise erhaltene Harzkomponente (A) wird in eine Kartusche eingebracht.

**Tabelle 1: Zusammensetzung der Acrylatharzmischung**

| | Massenprozent |
|---|---|
| Urethanmethacrylat und Reaktivverdünner | 97,31 |
| Beschleuniger | 2,30 |
| Brenzkatechin | 0,27 |
| 4-tert.-Butylbrenzkatechin | 0,09 |
| Tempol | 0,03 |

Als Härterkomponente (B) der Zweikomponenten-Mörtelmasse verwendet man eine wässrige Benzoylperoxidsuspension mit einem Feststoffanteil von 35 Gewichtsprozent, in dem 64 Gew.-% Füllstoff in Form von Quarzmehl, 1 Gew.-% pyrogene Kieselsäure, und 35 Gew.-% Benzoylperoxid enthalten sind. Der Anteil an Benzoylperoxid in der Härterkomponente (B) liegt somit bei 12,25 Gew.-% und der Wasseranteil bei 22,75 Gew.-%, bezogen auf das Gewicht der Härterkomponente (B). Die Härterkomponente (B) wird in eine zweite Kartusche eingefüllt.

Zur Anwendung als chemische Mörtelmasse zur Befestigung von Bauteilen werden die Harzkomponente (A) und die Härterkomponente (B) aus den Kartuschen ausgepresst und durch einen Statikmischer geführt oder in einem Dissolver gemischt, wodurch die Reaktion dieser Komponenten unter Aushärtung des Reaktionsharzes und wahlweise des Zements einsetzt. Die reagierende Masse wird in das Bohrloch eingespritzt, worauf das zu befestigende Bauteil eingeführt und justiert wird.

Das Gewichtsverhältnis der Harzkomponente (A) zur Härterkomponente (B) beträgt 4,8 : 1, wobei das Verhältnis von Urethanmethacrylat mit Reaktivverdünner zu Benzoylperoxid auf 13,5 : 1 eingestellt wird. Dieses Verhältnis von radikalisch härtbaren Komponenten zu Härtungsmittel wird in allen Ausführungsbeispielen beibehalten.

Die Mörtelmasse gemäß Beispiel 1 zeigt einen Polymerisationsschrumpf von etwa 3,4 %.

### Beispiele 2 bis 14

Auf die gleiche Weise wie in Beispiel 1 angegeben wurden Mörtelmassen hergestellt, bei denen jeweils 5 Volumenprozent des Aluminat-Zements gegen ein Aluminiumoxid ausgetauscht wurde. Somit blieb das Volumen der Harzmasse konstant. Zur Berechnung der Formulierung wurde eine Dichte des Aluminiumoxids von 4 g/cm³ zugrunde gelegt. Alle verwendeten Aluminiumoxide sind Handelsprodukte.

An den durch Vermischen der Harzkomponente (A) und der Härterkomponente (B) erhaltenen Mörtelmassen wurde der Polymerisationsschrumpf bestimmt. Bei einigen Mörtelmassen wurde durch die Zugabe der Übergangsaluminiumoxide die Gelzeit so stark verkürzt, dass keine Schrumpfmessung möglich war. In diesen Fällen wurde die Gelzeit durch Zugabe eines höheren Anteils an Polymerisationsinhibitoren verlängert.

Die Kristallphase und die Bezugsquelle der verwendeten Aluminiumoxide sowie die Schrumpfreduktion der unter Verwendung der Aluminiumoxide hergestellten Mörtelmassen sind in der nachfolgenden Tabelle 2 angegeben.

**Tabelle 2: Aluminiumoxide**

| Beispiel | Aluminiumoxid | Kristallphase | Lieferant | Schrumpfreduktion |
|---|---|---|---|---|
| 2 | Al₂O₃-KNO | θ / η | iolitec nanomaterials | ausgeprägt |
| 3 | Al₂O₃ -INO | θ / η | iolitec nanomaterials | leicht |
| 4 | Al₂O₃ activated neutral | θ / γ | Sigma Aldrich | sehr ausgeprägt |
| 5** | Al₂O₃-fumed*** | δ / η | Cabot | nein |
| 6** | Al₂O₃-calcined | α | Sigma Aldrich | leicht |
| 7** | Al₂O₃-fused | α | Sigma Aldrich | nein |
| 8** | Al₂O₃-Chempur | α | Chempur | nein |
| 9 | Al₂O₃-γ-iolitec | γ* | iolitec nanomaterials | leicht |
| 10 | Al₂O₃-SCCa 5/150 | γ* | Sasol | sehr ausgeprägt |
| 11 | Al₂O₃-SCCa 5/90 | δ* | Sasol | sehr ausgeprägt |
| 12 | Al₂O₃-SCFa 140 | γ/δ* | Sasol | ausgeprägt |
| 13 | Al₂O₃-SBa 90 | δ/θ* | Sasol | ausgeprägt |
| 14 | Al₂O₃-TH 100/90 | θ / η* | Sasol | leicht |

| | | | | |
|---|---|---|---|---|
| *Kristallphase nach Herstellerangaben **Vergleichsbeispiele ***nur 2,3 Volumenprozent | | | | |

Bei Verwendung des Aluminiumoxids Al₂O₃ fumed konnten wegen der starken Verdickungswirkung nur etwa 2,3 Volumenprozent in die Mörtelmasse eingebracht werden.

Den Beispielen der Tabelle 2 kann entnommen werden, dass der Polymerisationsschrumpf deutlich von dem verwendeten Aluminiumoxidtyp beeinflusst wird. Alle Aluminiumoxide mit einer den Polymerisationsschrumpf reduzierenden Wirkung sind Übergangsaluminiumoxide. Die Aluminiumoxide können mit Bezug auf die Schrumpfreduktion in vier Gruppen unterteilt werden. Die erste Gruppe besteht aus drei Übergangsaluminiumoxiden (Al₂O₃ activated neutral, Al₂O₃-SCCa 5/150 und Al₂O₃-SCCa 5/90), die den Polymerisationsschrumpf deutlich auf unter 1% reduzieren. Die nächste Gruppe beinhaltet drei Übergangsaluminiumoxide (Al₂O₃-KNO, Al₂O₃-SCFa 140 und Al₂O₃-SBa 90), die den Schrumpf auf etwa 1,3% bis 1,6% reduzieren. Danach folgen vier Aluminiumoxide mit einem Polymerisationsschrumpf von etwa 2,3 bis 2,7%. Die Aluminiumoxide der vierten Gruppe bleiben ohne Einfluss auf den Polymerisationsschrumpf im Vergleich zur Masse gemäß Beispiel 1.

Die Ausführungsbeispiele zeigen weiter, dass die Reduktion des Polymerisationsschrumpfes außerdem von der Teilchengröße des Aluminiumoxids beeinflusst wird. Die Teilchengrößenverteilung der verwendeten Übergangsaluminiumoxide ist in Tabelle 3 angegeben.

**Tabelle 3: Teilchengrößenverteilung**

| Beispiel | Aluminiumoxid | Schrumpfreduktion | d5 [µm] | d50 [µm] | d95 [µm] | d5/d95 |
|---|---|---|---|---|---|---|
| 2 | Al2O3-KNO | ausgepräg t | 4,5 ± 0,0 | 34,3 ± 0,1 | 93,2 ± 0,33 | 0,05 ± 0,00 |
| 3 | Al2O3 -INO | leicht | 2,4 ± 0 | 20,3 ± 1,8 | 78,1 ± 7,6 | 0,03 ± 0,00 |
| 4 | Al2O3-activated neutral | sehr ausgepräg t | 48,3 ± 1,0 | 102,5 ± 0,5 | 158,8 ± 0,7 | 0,30 ± 0,00 |
| 5** | Al2O3-fumed | nein | 0,1 ± 0,0 | 0,16 ± 0,0 | 0,43 ± 0,1 | 0,26 ± 0,07 |
| 6** | Al2O3-calcined | leicht | 16,7 ± 2,0 | 73,5 ± 2,3 | 130,5 ± 1,6 | 0,13 ± 0,01 |
| 7** | Al2O3-fused | nein | 13,9 ± 0,0 | 31,0 ± 0,1 | 68,5 ± 0,3 | 0,20 ± 0,00 |
| 8** | Al2O3-Chempur | nein | 0,3 ± 0,0 | 2,6 ± 0,8 | 28,7 ± 11,3 | 0,01 ± 0,00 |
| 9 | Al2O3-γ-iolitec | leicht | 0,5 ± 0,5 | 14,8 ± 8,3 | 56,1 ± 20,4 | 0,01 ± 0,01 |
| 10 | Al2O3-SCCa 5/150 | sehr ausgepräg t | 10,6 ± 1,8 | 66,8 ± 1,3 | 114,3 ± 1,0 | 0,09 ± 0,02 |
| 11 | Al2O3-SCCa 5/90 | sehr ausgepräg t | 34,1 ± 13,7 | 76,5 ± 6,1 | 134,7 ± 3,4 | 0,25 ± 0,10 |
| 12 | Al2O3-SCFa 140 | ausgepräg t | 2,9 ± 0,1 | 30,6 ± 1,5 | 99,3 ± 5,4 | 0,03 ± 0,00 |
| 13 | Al2O3-SBa 90 | ausgepräg t | 3,3 ± 0,4 | 29,5 ± 3,3 | 84,9 ± 3,4 | 0,04 ± 0,00 |
| 14 | Al2O3-TH 100/90 | leicht | 3,5 ± 0,1 | 33,5 ± 0,1 | 93,6 ± 0,5 | 0,04 ± 0,00 |

| | | | | | | |
|---|---|---|---|---|---|---|
| **Vergleichsbeispiele | | | | | | |

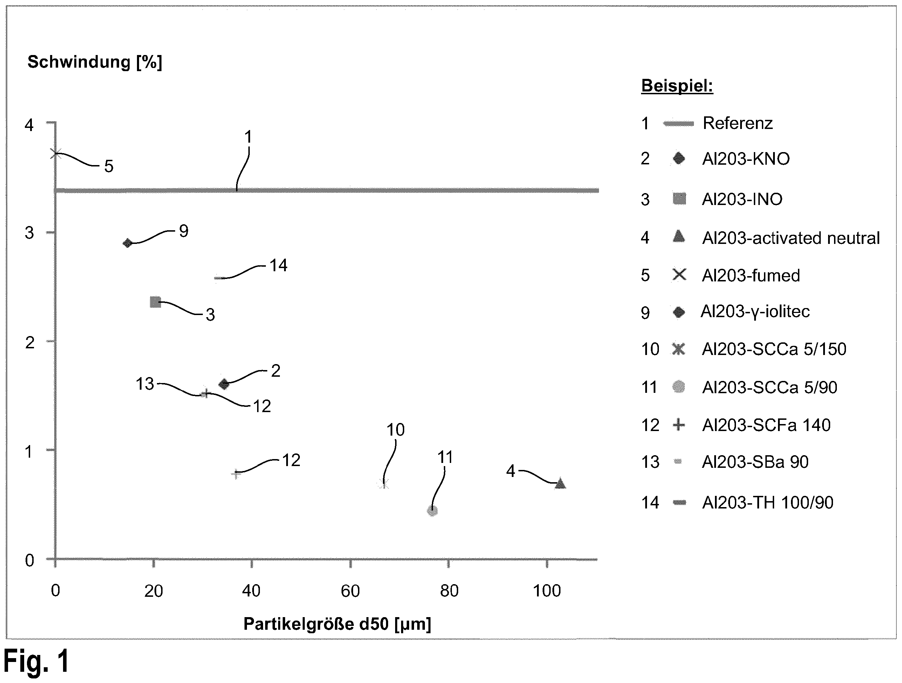

In Figur 1 ist die mittlere Teilchengröße der Übergangsaluminiumoxide gegen den Polymerisationsschrumpf aufgetragen. Aus diesem Diagramm ist zu erkennen, dass eine ausgeprägte Reduktion des Polymerisationsschrumpfes ab einer mittleren Teilchengröße von etwa 25 µm auftritt, während eine leichte Schrumpfreduktion ab einer mittleren Teilchengröße von etwa 14 µm erzielt werden kann.

α-Aluminiumoxide zeigen auch bei einer höheren mittleren Teilchengröße keine ausgeprägte Schrumpfreduktion. Eine gemäß Beispiel 4 unter Verwendung des Übergangsaluminiumoxids Al₂O₃ activated neutral hergestellte Mörtelmasse, das in einer Kugelmühle etwa 15 Minuten lang gemahlen wurde zeigt bei einer mittleren Teilchengröße d50 von 7,1 µm nur noch eine leichte Schrumpfreduktion von 3%. Bei einer Mahldauer von nur 5 Minuten und einer so eingestellten mittleren Teilchengröße des von Al₂O₃ activated neutral von etwa 12,0 µm konnte eine Verbesserung der Schrumpfreduktion auf etwa 2,6 % beobachtet werden. Eine durch Verkürzung der Mahldauer auf 3 min erhaltenes Al₂O₃ activated neutral mit einem mittleren Teilchendurchmesser von etwa 20 µm ergibt Mörtelmassen mit einem Polymerisationsschrumpf von etwa 1,8 %. Diese Messungen zeigen ebenfalls, dass der Polymerisationsschrumpf der Mörtelmassen durch die Teilchengröße des eingesetzten Übergangsaluminiumoxids maßgeblich beeinflusst wird.

Aus BET-Messungen der Übergangsaluminiumoxide ist kein Zusammenhang zwischen der spezifischen Oberfläche (BET) und dem Polymerisationsschrumpf zu erkennen. Der für das Übergangsaluminiumoxid TH100/90 ermittelte Porendurchmesser von 27,0 nm deutet aber darauf hin, dass zu große Poren in dem verwendeten Übergangsaluminiumoxid den Polymerisationsschrumpf der Mörtelmasse eher steigern. Ein bevorzugter Porendurchmesser der Übergangsaluminiumoxide liegt daher in einem Bereich von etwa 5 bis 15 nm.

Die Verwendung von porösen Kieselgelen in Mörtelmassen gemäß Beispiel 1 mit einer mittleren Teilchengröße d50 von 11 bis 130 µm und Porendurchmessern in einem Bereich von 3 bis 15 nm, in einem Anteil von 5 Volumenprozent, führt überraschenderweise nicht zu einer Reduktion des Polymerisationsschrumpfes.

### Beispiele 15 bis 19

Auf die gleiche Weise wie in Beispiel 1 angegeben wurden Mörtelmassen hergestellt, bei denen unterschiedliche Volumenanteile des Aluminat-Zements in der Harzkomponente (A) gegen einen entsprechenden Anteil des Übergangsaluminiumoxids Al₂O₃-KNO ausgetauscht wurde. Somit blieb das Volumen der Harzmasse konstant. An den durch Vermischen der Harzkomponente (A) mit der Härterkomponente (B) im Speedmixer erhaltenen Mörtelmassen wurde der Polymerisationsschrumpf bestimmt. Die erhaltenen Ergebnisse sind in der nachfolgenden Tabelle 4 angegeben.

**Tabelle 4**

| Beispiel | Volumenanteil Al2O3-KNO [%] | Polymerisationsschrumpf [%] |
|---|---|---|
| 15 | 0,5 | 3,1 |
| 16 | 1 | 2,4 |
| 17 | 3 | 1,7 |
| 18 | 5 | 1,3 |
| 19 | 8 | 1,5 |

Die in Tabelle 4 dargestellten Ergebnisse zeigen, dass eine ausgeprägte Reduktion des Polymerisationsschrumpfes ab einem Anteil von etwa 1 Volumenprozent des Übergangsaluminiumoxids in der Mörtelmasse auftritt. Bei höheren Volumenanteilen ab etwa 10 % konnte die untersuchte Masse nur noch schlecht verarbeitet werden.

Aus DSC-Messungen an der Mörtelmasse gemäß Beispiel 16 ist ersichtlich, dass weder die Reaktionsenthalphie noch die Geschwindigkeit der Aushärtung durch den Zusatz der Übergangsaluminiumoxide beeinflusst wird. Es kann lediglich eine Verkürzung der Gelzeit festgestellt werden, die durch Zugabe von weiteren Polymerisationsinhibitoren ausgeglichen werden kann. Der pH-Wert des eingesetzten Übergangsaluminiumoxids ist ebenfalls ohne Einfluss auf die Schrumpfreduktion.

### Beispiele 20 bis 24

Auf die gleiche Weise wie in Beispiel 1 angegeben wurden Mörtelmassen mit unterschiedlichen Polymerisationsinhibitoren hergestellt. Die Zusammensetzung der Harzkomponente (A) der jeweils hergestellten Mörtelmassen ist in der folgenden Tabelle 5 angegeben. Der Anteil von Al₂O₃ activated neutral in den Beispielen 21 bis 24 entspricht 1 Volumenprozent der Mörtelmasse.

In der Tabelle 5 bedeuten

| | |
|---|---|
| Tempol: | 4-Hydroxy-2,2-6,6-tetramethyl-piperidin-1-oxyl |
| BHT: | tert.-Butylhydroxytoluol |
| BK: | Brenzkatechin |
| tBBK: | 4-tert-Butylbrenzcatechin |

**Tabelle 5: Zusammensetzung der Harzkomponente (A)**

| | Beispiel 20 (Vergleich) | Beispiel 21 | Beispiel 22 | Beispiel 23 | Beispiel 24 |
|---|---|---|---|---|---|
| Komponenten | [Gew.-%] | [Gew.-%] | [Gew.-%] | [Gew.-%] | [Gew.-%] |
| Urethanmethacrylatharz und Reaktivverdünner | 33,6 | 33,5 | 33,5 | 33,5 | 33,5 |
| Beschleuniger | 0,8 | 0,8 | 0,79 | 0,79 | 0,79 |
| Quarzmehl | 44,2 | 44,2 | 44,2 | 44,2 | 44,2 |
| Aluminat-Zement | 18,4 | 16,6 | 16,6 | 16,7 | 16,7 |
| Pyrogene Kieselsäure | 2,8 | 2,5 | 2,5 | 2,5 | 2,5 |
| Al₂O₃ activated neutral | 0 | 2,2 | 2,2 | 2,2 | 2,2 |
| Tempol | 0,2 | 0,2 | 0,01 | 0,01 | 0,01 |
| BHT | | | 0,2 | | |
| BK | | | | 0,1 | |
| tBBK | | | | | 0,1 |
| | | | | | |
| Summe | 100 | 100 | 100 | 100 | 100 |
| Schrumpfreduktion | nein | leicht | nein | ausgeprägt | ausgeprägt |

Die Beispiele zeigen, dass Mörtelmassen mit sterisch nicht gehinderten Phenolen wie Brenzkatechin oder tBBK eine sehr ausgeprägte Schrumpfreduktion ergeben. Gleiche Ergebnisse konnten mit anderen zweiwertigen Phenolen wie Hydrochinon, 3,4-Dihydroxybenzaldehyd, 3
5-Di-tert.-butylbrenzkatechin und 4-Methylbrenzkatechin erhalten werden. In Abwesenheit von phenolischen Polymerisationsinhibitoren und/oder bei Verwendung von sterisch gehinderten Phenolen wie BHT konnte jedoch keine wesentliche Schrumpfreduktion gemessen werden. Dieses Ergebnis kann auf die Beobachtung zurückgeführt werden, dass phenolische Polymerisationsinhibitoren, insbesondere solche mit zwei und mehr Hydroxylgruppen, eine starke Wechselwirkung mit Übergangsaluminiumoxiden zeigen, die auf eine kovalente Bindung der phenolischen Hydroxylgruppen an die Oberfläche der Aluminiumoxide schließen lässt. Sterisch gehinderte Phenole wie BHT können dagegen keine Bindung mit dem Übergangsaluminiumoxid eingehen.

### Beispiel 25

Zur Herstellung einer Zweikomponenten-Mörtelmasse mit wasserfreier Härterkomponente wurde zunächst die Harzkomponente (A) mit der in der folgenden Tabelle 6 angegebenen Zusammensetzung bereitgestellt. Die Mischung wurde im Dissolver unter Vakuum zu einer luftblasenfreien pastösen Masse homogenisiert. Die auf diese Weise erhaltene Harzkomponente (A) wurde in eine Kartusche eingebracht.

**Tabelle 6: Harzkomponente (A)**

| | Massenanteile |
|---|---|
| | [Gew.-%] |
| Methacrylatharz und Reaktivverdünner | 34,5 |
| 4-tert-Butylbrenzcatechin | 0,035 |
| Quarzsand | 44,2 |
| Tonerdezement | 16,55 |
| pyrogene Kieselsäure 1 | 0,9 |
| pyrogene Kieselsäure 2 | 1,6 |
| Al₂O₃-activated neutral | 2,22 |

Als Härterkomponente (B) wurde eine im Handel unter der Bezeichnung PerkadoxTM erhältliche wasserfreie Benzoylperoxidmischung verwendet, die durch inerte Füllstoffe phlegmatisiert ist. In dieser Härterkomponente sind Dibenzoylperoxid in einem Anteil von 19 bis 22 Gewichtsprozent und Füllstüffe in einem Anteil von 78 bis 81 Gewichtsprozent enthalten. Die Härterkomponente (B) wurde in eine zweite Kartusche eingefüllt.

Anschließend wurden die Harzkomponente (A) und die Härterkomponente (B) im Speedmixer gemischt und der Polymerisationsschrumpf bestimmt. Das Gewichtsverhältnis der radikalisch härtbaren Komponenten (Methacrylatharz mit Reaktivverdünner) zum Härtungsmittel in der Härterkomponente (B) betrug 13,5 : 1.

Die Mörtelmasse gemäß Beispiel 25 zeigt einen Polymerisationsschrumpf von 1,6%. Damit ist nachgewiesen, dass Wasser in der Härterkomponente (B) nicht für die Schrumpfreduktion benötigt wird und dass bei Verwendung einer wasserfreien Härterkomponente bereits geringe Mengen an Übergangsaluminiumoxid ausreichen, um eine ausgeprägte Schrumpfreduktion zu erzielen.

### Beispiel 26

Zur Herstellung einer Zweikomponenten-Mörtelmasse mit in die wasserhaltige Härterkomponente (B) eingebrachtem Übergangsaluminiumoxid wurde die in Beispiel 1 angegebene Harzkomponente (A) mit der in der folgenden Tabelle 7 angegebenen Härterkomponente (B) im Speedmixer gemischt und der Polymerisationsschrumpf gemessen. Die in die Mörtelmasse eingebrachte Menge an Übergangsaluminiumoxid entspricht 1 Volumenprozent.

**Tabelle 7: Härterkomponente (B)**

| | Massenanteile [Gew.-%] |
|---|---|
| Dibenzoylperoxid | 12,25 |
| Wasser | 22,75 |
| Füllstoffe | 53 |
| pyrogene Kieselsäure | 1 |
| Al₂O₃-activated neutral | 11 |

Die Mörtelmasse gemäß Beispiel 26 zeigt gegenüber dem Vergleichsbeispiel 1 keine Reduktion des Polymerisationsschrumpfes. Ohne die Bindung an eine Theorie zu beabsichtigen, kann angenommen werden, dass das Übergangsaluminiumoxid in der Härterkomponente (B) durch den über einen längeren Zeitraum erfolgenden Kontakt mit Wasser deaktiviert und/oder eine Wechselwirkung mit den phenolischen Polymerisationsinibitoren verhindert wird.

### Beispiel 27

### Bestimmung der Verbundspannung

Die unter Verwendung der Mörtelmassen mit Harzzusammensetzungen gemäß den Beispielen 1 und 16 bis 18 erhaltenen Verbundspannungen sind in der nachfolgenden Tabelle 8 zusammengestellt:

**Tabelle 8: Verbundspannung der Mörtelmassen**

| | Polymerisationsschrumpf [%] | Verbundspannung [N/mm²] |
|---|---|---|
| Beispiel 1 | 3,4 | 23,6 |
| Beispiel 16 | 2,4 | 25,0 |
| Beispiel 17 | 1,8 | 29,9 |
| Beispiel 18 | 1,3 | 31,8 |

Wie aus den in Tabelle 8 dargestellten Ergebnissen zu erkennen ist, zeigen die erfindungsgemäßen Zweikomponenten-Mörtelmasse gegenüber der Masse gemäß Vergleichsbeispiel 1 keine Verschlechterung der Lastwerte für die Haftung der Ankerstangen im Stahlhülsentest.

Die oben beschriebenen Messungen wurden mit modifizierten Stahlhülsen wiederholt, wobei die Hinterschnitttiefe der Stahlhülsen zwischen 25 µm und 350 µm bei einer Hinterschnittbreite von 3 mm variiert wurden.

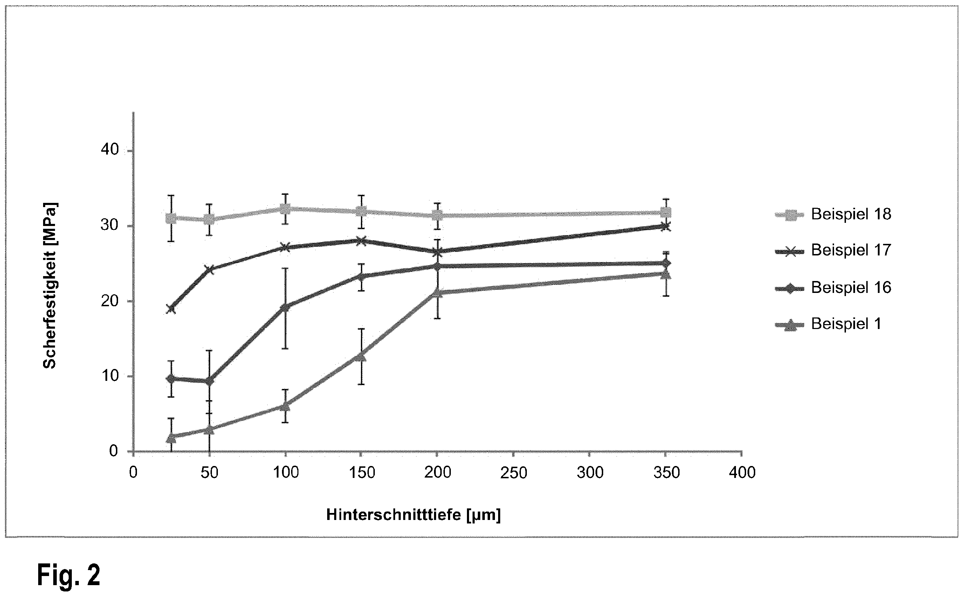

In Fig. 2 ist die Abhängigkeit der Verbundspannung von der Hinterschnittbreite der Ankerstange für die Referenzmasse gemäß Beispiel 1 und die Zweikomponenten-Mörtelmassen gemäß den Beispielen 16, 17 und 18 dargestellt. Zu erkennen ist, dass die Mörtelmasse gemäß Beispiel 18 aufgrund des geringeren Schrumpfes für alle getesteten Hinterschnitttiefen eine im Wesentlichen gleichbleibende Verbundspannung ergibt, während die Referenzmasse gemäß Beispiel 1 bei einer glatteren Oberfläche mit niedriger Hinterschnitttiefe leichter versagt und erst bei rauen Oberflächen mit Hinterschnitttiefen ab 200 µm eine hinreichende Auszugsfestigkeit aufweist. Gleichzeitig kann gezeigt werden, dass die Leistung des Verbunddübels umso besser ist, je geringer der Polymerisationsschrumpf der Mörtelmasse ist. Die Abhängigkeit der mit den Mörtelmassen erzielten Verbundspannung von der Hinterschnitttiefe der Stahlhülsen ist für Mörtelmassen mit hohem Polymerisationsschrumpf deutlich größer als für Mörtelmassen mit niedrigem Polymerisationsschrumpf.

### Beispiel 28

### Lastwerte von Mörtelmassen in übergroßen Bohrlöchern

Zur Bestimmung der mit Zweikomponenten-Mörtelmassen erzielten Lastwerte verwendet man hochfeste Ankergewindestangen M12 oder M24, die in ein Bohrloch mit einem vorbestimmten Durchmesser und einer Bohrlochtiefe von 72 mm mit der jeweiligen Zweikomponenten-Mörtelmasse eingedübelt werden. Für diesen Versuch wurden die Mörtelmassen gemäß Beispiel 1 mit einem Polymerisationsschrumpf von 3,4 % und gemäß Beispiel 17 mit einem Polymerisationsschrumpf von 1,8 % verwendet. Die Bohrlöcher wurden unter Verwendung eines Diamantbohrers nass gebohrt und unter Verwendung von Druckluft (6 bar) gereinigt, gebürstet und nochmals mit Druckluft ausgeblasen. Nach einer Aushärtezeit von 24 Stunden bei Raumtemperatur ermittelt man die mittlere Versagenslast durch zentrisches Ausziehen der Ankergewindestange mit enger Abstützung und bestimmt die mittlere Versagenslast von drei Ankern.

Die Versuche wurden an übergroßen Bohrlöchern mit einem Durchmesser des 1,5fachen der jeweiligen Ankergewindestange unter ansonsten gleichen Bedingungen wiederholt.

Die so ermittelten Werte für die mittlere Versagenslast sind in der nachfolgenden Tabelle 9 angegeben.

**Tabelle 9: Lastwerte**

| Mörtelmasse | Gewindestange Durchmesser [mm] | Bohrloch Durchmesser [mm] | Versagenslast [N/mm²] | Änderung [%] |
|---|---|---|---|---|
| Beispiel 1 | 12 | 14 | 23,8 | |
| Beispiel 1 | 12 | 18 | 17,6 | -26,4% |
| Beispiel 17 | 12 | 14 | 25,0 | |
| Beispiel 17 | 12 | 18 | 22,3 | -10,8% |
| Beispiel 1 | 24 | 28 | 12,4 | |
| Beispiel 1 | 24 | 35 | 8,4 | -32,2% |
| Beispiel 17 | 24 | 28 | 22,2 | |
| Beispiel 17 | 24 | 35 | 25,6 | +13,5% |

Gegenüber der Mörtelmasse gemäß Beispiel 1 kann durch die Zugabe von Übergangsaluminiumoxid zur Harzkomponente (A) nicht nur die mittlere Versagenslast bei nassgebohrten Bohrlöchern deutlich verbessert werden. Es kann auch gezeigt werden, dass die mittlere Versagenslast bei übergroßen Bohrlöchern weniger stark abnimmt und die erfindungsgemäßen Massen somit stabiler gegenüber externen Einflüssen sind.

## Patentansprüche

1. Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) und/oder die Härterkomponente (B) als weiteren Bestandteil mindestens einen anorganischen Zusatz enthält, **dadurch gekennzeichnet, dass** der anorganische Zusatz ein Übergangsaluminiumoxid mit einer mittleren Teilchengröße d50 von mindestens 7,0 µm und einem Porendurchmesser von 4 nm bis 30 nm umfasst.

2. Mörtelmasse nach Anspruch 1, **dadurch gekennzeichnet, dass** der anorganische Zusatz wenigstens das Übergangsaluminiumoxid sowie einen oder mehrere weitere Stoffe umfasst, die aus der aus anorganischen Füllstoffen, hydraulisch abbindenden oder polykondensierbaren anorganischen Verbindungen, Modifikatoren und Mischungen davon bestehenden Gruppe ausgewählt sind.

3. Mörtelmasse nach Anspruch 1 oder 2, **dadurch gekennzeichnet, dass** der anorganische Zusatz einen Füllstoff umfasst, bevorzugt einen aus der aus Quarz, Glas, Korund, Porzellan, Steingut, Schwerspat, Leichtspat, Gips, Talkum und/oder Kreide sowie deren Mischungen bestehenden Gruppe ausgewählten Füllstoff.

4. Mörtelmasse nach einem der vorangehenden Ansprüche, **dadurch gekennzeichnet, dass** der anorganische Zusatz eine hydraulisch abbindende oder polykondensierbare anorganische Verbindung umfasst.

5. Mörtelmasse nach einem der vorangehenden Ansprüche, **dadurch gekennzeichnet, dass** der anorganische Zusatz weitere anorganische Modifikatoren umfasst, bevorzugt Verdicker, Verflüssiger und Thixotropiermittel sowie Mischungen davon.

6. Mörtelmasse nach einem der vorangehenden Ansprüche, **dadurch gekennzeichnet, dass** das Übergangsaluminiumoxid in der Mörtelmasse in einem Anteil von 0,5 bis 10 Volumenprozent vorliegt, bevorzugt von 1 bis 8 Volumenprozent.

7. Mörtelmasse nach einem der vorangehenden Ansprüche, **dadurch gekennzeichnet, dass** die mittlere Teilchengröße d50 des Übergangsaluminiumoxids mindestens 12,0 µm beträgt, bevorzugt mindestens 14,0 µm, weiter bevorzugt mindestens 25,0 µm und besonders bevorzugt mindestens 35 µm.

8. Mörtelmasse nach einem der vorangehenden Ansprüche, **dadurch gekennzeichnet, dass** der Polymerisationsschrumpf der Mörtelmasse unter 3,1 % liegt, bevorzugt unter 2,5 %, weiter bevorzugt unter 2 % und besonders bevorzugt unter 1 %.

9. Mörtelmasse nach einem der vorangehenden Ansprüche, **dadurch gekennzeichnet, dass** das Übergangsaluminiumoxid eine mittlere Teilchengröße d50 von bis zu 120 µm aufweist.

10. Mörtelmasse nach einem der vorangehenden Ansprüche, **dadurch gekennzeichnet, dass** das Übergangsaluminiumoxid einen Porendurchmesser in einem Bereich von 4,5 nm bis 20 nm, bevorzugt 4,5 nm bis 15,0 nm aufweist.

11. Mörtelmasse nach einem der vorangehenden Ansprüche, **dadurch gekennzeichnet, dass** die anorganischen Zusätze, einschließlich des Übergangsaluminiumoxids, in der Mörtelmasse in einem Anteil von 50 bis 80 Gewichtsprozent vorliegen, bezogen auf das Gesamtgewicht der Masse.

12. Mörtelmasse nach einem der vorangehenden Ansprüche, **dadurch gekennzeichnet, dass** das radikalisch härtbare Harz ein Urethan(meth)acrylatharz und/oder ein (meth)acrylatmodifiziertes Epoxidharz umfasst.

13. Mörtelmasse nach einem der vorangehenden Ansprüche, **dadurch gekennzeichnet, dass** die Harzkomponente (A) mindestens einen Polymerisationsinhibitor aus der Gruppe der phenolischen Verbindungen umfasst, sowie wahlweise nicht-phenolische Verbindungen aus der Gruppe der stabilen Radikale und/oder Phenothiazine.

14. Mörtelmasse nach Anspruch 13, **dadurch gekennzeichnet, dass** der Polymerisationsinhibitor eine phenolische Verbindung umfasst, die eine Bindung mit dem Übergangsaluminiumoxid eingehen kann, bevorzugt eine phenolische Verbindung mit mindestens zwei Hydroxygruppen, besonders bevorzugt Hydrochinon und Hydrochinon-Derivate, Benzochinon, Brenzkatechin und Brenzkatechinderivate wie *tert*-Butylbrenzkatechin, 4-Methylbrenzkatechin, 3,5-Ditertbutylbrenzkatechin und 3,4-Dihydroxybenzaldehyd, und Mischungen davon.

15. Mörtelmasse nach einem der vorangehenden Ansprüche, **dadurch gekennzeichnet, dass** die Härterkomponente (B) wasserfrei ist.

16. Mörtelmasse nach einem der vorangehenden Ansprüche, **dadurch gekennzeichnet, dass** die Harzkomponente (A) zusammengesetzt ist aus:
einem radikalisch härtbaren Harz in einem Anteil von 5 bis 45 Gew.-%;
einem Reaktivverdünner in einem Anteil von 0 bis 25 Gew.-%;
einem Beschleuniger in einem Anteil von 0 bis 3 Gew.-%;
einem Polymerisationsinhibitor in einem Anteil von 0 bis 5 Gew.-%; und
wenigstens einen anorganischen Zusatz in einem Anteil von 50 bis 80 Gew.-%;
wobei die Summe aller Anteile 100 Gewichtsprozent ergibt, und wobei der anorganische Zusatz wenigstens ein Übergangsaluminiumoxid mit einer mittleren Teilchengröße d50 von mindestens 7 µm und einem Porendurchmesser von 4 nm bis 30 nm umfasst.

17. Mörtelmasse nach einem der vorangehenden Ansprüche, **dadurch gekennzeichnet, dass** die durch Vermischen der Harzkomponente (A) und der Härterkomponente (B) erhältliche Mörtelmasse zusammengesetzt ist aus:
einem radikalisch härtbaren Harz in einem Anteil von 5 bis 50 Gew.-%;
einem Reaktivverdünner in einem Anteil von 0 bis 25 Gew.-%;
einem organischen Peroxid in einem Anteil von 0,5 bis 5 Gew.-%;
einem Polymerisationsbeschleuniger in einem Anteil von 0 bis 0,5 Gew.-%;
wenigstens einem Übergangsaluminiumoxid in einem Anteil von 2 bis 20 Gewichtsprozent;
weiteren anorganischen Zusätzen in einem Anteil von 10 bis 78 Gew.-%; und
Wasser in einem Anteil von 0 bis 10 Gew.-%;
wobei die Summe aller Anteile der Masse 100 Gewichtsprozent ergibt.

18. Verwendung der Zweikomponenten-Mörtelmasse gemäß einem der vorhergehenden Ansprüche zur chemischen Befestigung von Bauteilen, wie Ankergewindestangen, Bewehrungseisen, Gewindehülsen und Schrauben, in Bohrlöchern, die in einem mineralischen Untergrund vorliegen.

## Claims

1. Two-component mortar composition comprising a resin component (A), which contains at least one radically curable resin as a curable component, and a curing component (B), which contains a curing agent for the radically curable resin of the resin component (A), the resin component (A) and/or the curing component (B) containing at least one inorganic additive as a further constituent, **characterized in that** the inorganic additive comprises a transition alumina having an average particle size d50 of at least 7.0 µm and a pore diameter of 4 nm to 30 nm.

2. Mortar composition according to claim 1, **characterized in that** the inorganic additive comprises at least the transition alumina and one or more further substances which are selected from the group consisting of inorganic fillers, hydraulically setting or polycondensable inorganic compounds, modifiers and mixtures thereof.

3. Mortar composition according to either claim 1 or claim 2, **characterized in that** the inorganic additive comprises a filler, preferably a filler selected from the group consisting of quartz, glass, corundum, porcelain, earthenware, heavy spar, light spar, gypsum, talc and/or chalk and mixtures thereof.

4. Mortar composition according to any of the preceding claims, **characterized in that** the inorganic additive comprises a hydraulically setting or polycondensable inorganic compound.

5. Mortar composition according to any of the preceding claims, **characterized in that** the inorganic additive comprises further inorganic modifiers, preferably thickeners, plasticizers and thixotropic agents and mixtures thereof.

6. Mortar composition according to any of the preceding claims, **characterized in that** the transition alumina is present in the mortar composition in a proportion of 0.5 to 10 percent by volume, preferably 1 to 8 percent by volume.

7. Mortar composition according to any of the preceding claims, **characterized in that** the average particle size d50 of the transition alumina is at least 12.0 µm, preferably at least 14.0 µm, more preferably at least 25.0 µm and particularly preferably at least 35 µm.

8. Mortar composition according to any of the preceding claims, **characterized in that** the polymerization shrinkage of the mortar composition is below 3.1%, preferably below 2.5%, more preferably below 2% and particularly preferably below 1%.

9. Mortar composition according to any of the preceding claims, **characterized in that** the transition alumina has an average particle size d50 of up to 120 µm.

10. Mortar composition according to any of the preceding claims, **characterized in that** the transition alumina has a pore diameter in a range of 4.5 nm to 20 nm, preferably 4.5 nm to 15.0 nm.

11. Mortar composition according to any of the preceding claims, **characterized in that** the inorganic additives, including the transition alumina, are present in the mortar composition in a proportion of 50 to 80 percent by weight, based on the total weight of the composition.

12. Mortar composition according to any of the preceding claims, **characterized in that** the radically curable resin comprises a urethane (meth)acrylate resin and/or a (meth)acrylate-modified epoxy resin.

13. Mortar composition according to any of the preceding claims, **characterized in that** the resin component (A) comprises at least one polymerization inhibitor from the group of the phenolic compounds, and optionally non-phenolic compounds from the group of the stable radicals and/or phenothiazines.

14. Mortar composition according to claim 13, **characterized in that** the polymerization inhibitor comprises a phenolic compound which can bond with the transition alumina, preferably a phenolic compound having at least two hydroxyl groups, particularly preferably hydroquinone and hydroquinone derivatives, benzoquinone, pyrocatechol and pyrocatechol derivatives such as *tert*-butyl pyrocatechol, 4-methyl pyrocatechol, 3,5-di-tert-butyl pyrocatechol and 3,4-dihydroxybenzaldehyde, and mixtures thereof.

15. Mortar composition according to any of the preceding claims, **characterized in that** the curing component (B) is anhydrous.

16. Mortar composition according to any of the preceding claims, **characterized in that** the resin component (A) is composed of:
a radically curable resin in a proportion of 5 to 45 wt.%;
a reactive diluent in a proportion of 0 to 25 wt.%;
an accelerator in a proportion of 0 to 3 wt.%;
a polymerization inhibitor in a proportion of 0 to 5 wt.%; and
at least one inorganic additive in a proportion of 50 to 80 wt.%;
the sum of all parts being 100 percent by weight, and the inorganic additive comprising at least one transition alumina having an average particle size d50 of at least 7 µm and a pore diameter of 4 nm to 30 nm.

17. Mortar composition according to any of the preceding claims, **characterized in that** the mortar composition obtainable by mixing the resin component (A) and the curing component (B) is composed of:
a radically curable resin in a proportion of 5 to 50 wt.%;
a reactive diluent in a proportion of 0 to 25 wt.%;
an organic peroxide in a proportion of 0.5 to 5 wt.%;
a polymerization accelerator in a proportion of 0 to 0.5 wt.%;
at least one transition alumina in a proportion of 2 to 20 percent by weight;
further inorganic additives in a proportion of 10 to 78 wt.%; and
water in a proportion of 0 to 10 wt.%;
the sum of all parts of the composition being 100 percent by weight.

18. Use of the two-component mortar composition according to any of the preceding claims for the chemical fastening of components, such as anchor threaded rods, reinforcing bars, threaded sleeves and screws, in boreholes that are present in a mineral substrate.

## Revendications

1. Mélange de mortier à deux composants comprenant un composant résine (A) qui contient, comme élément durcissable, au moins une résine durcissable sous l'action de radicaux, et un composant durcisseur (B) qui contient un agent de durcissement pour la résine durcissable sous l'action de radicaux du composant résine (A), le composant résine (A) et/ou le composant durcisseur (B) contenant, comme autre élément, au moins un additif inorganique, **caractérisé en ce que** l'additif inorganique comprend une alumine de transition présentant une granulométrie moyenne d50 d'au moins 7,0 µm et un diamètre de pore de 4 à 30 nm.

2. Mélange de mortier selon la revendication 1, **caractérisé en ce que** l'additif inorganique comprend au moins l'alumine de transition et une ou plusieurs autres substances choisies dans le groupe constitué par les charges inorganiques, les composés inorganiques à prise hydraulique ou polycondensables, les modificateurs et des mélanges de ceux-ci.

3. Mélange de mortier selon la revendication 1 ou 2, **caractérisé en ce que** l'additif inorganique comprend une charge, de préférence une charge choisie dans le groupe constitué par le quartz, le verre, le corindon, la porcelaine, la faïence, la barytine, le spath léger, le gypse, le talc et/ou la craie ainsi que leurs mélanges.

4. Mélange de mortier selon l'une des revendications précédentes, **caractérisé en ce que** l'additif inorganique comprend un composé inorganique à prise hydraulique ou polycondensable.

5. Mélange de mortier selon l'une des revendications précédentes, **caractérisé en ce que** l'additif inorganique comprend d'autres modificateurs inorganiques, de préférence des épaississants, des plastifiants et des agents thixotropes ainsi que des mélanges de ceux-ci.

6. Mélange de mortier selon l'une des revendications précédentes, **caractérisé en ce que** l'alumine de transition est présente dans le mélange de mortier dans une proportion de 0,5 à 10 % en volume, de préférence de 1 à 8 % en volume.

7. Mélange de mortier selon l'une des revendications précédentes, **caractérisé en ce que** la granulométrie moyenne d50 de l'alumine de transition est d'au moins 12,0 µm, de préférence d'au moins 14,0 µm, de manière davantage préférée d'au moins 25,0 µm et de manière particulièrement préférée d'au moins 35 µm.

8. Mélange de mortier selon l'une des revendications précédentes, **caractérisé en ce que** le rétrécissement de polymérisation du mélange de mortier est inférieur à 3,1 %, de préférence inférieur à 2,5 %, de manière davantage préférée inférieur à 2 % et de manière particulièrement préférée inférieur à 1 %.

9. Mélange de mortier selon l'une des revendications précédentes, **caractérisé en ce que** l'alumine de transition présente une granulométrie moyenne d50 allant jusqu'à 120 µm.

10. Mélange de mortier selon l'une des revendications précédentes, **caractérisé en ce que** l'alumine de transition présente un diamètre de pore compris entre 4,5 et 20 nm, de préférence entre 4,5 et 15,0 nm.

11. Mélange de mortier selon l'une des revendications précédentes, **caractérisé en ce que** les additifs inorganiques, y compris l'alumine de transition, sont présents dans le volume de mortier dans une proportion de 50 à 80 % en poids, par rapport au poids total du mélange.

12. Mélange de mortier selon l'une des revendications précédentes, **caractérisé en ce que** la résine durcissable sous l'action de radicaux comprend une résine uréthane (méth)acrylate et/ou une résine époxy modifiée par un (méth)acrylate.

13. Mélange de mortier selon l'une des revendications précédentes, **caractérisé en ce que** le composant résine (A) contient au moins un inhibiteur de polymérisation choisi dans le groupe des composés phénoliques, et éventuellement des composés non phénoliques choisis dans le groupe des radicaux stables et/ou des phénothiazines.

14. Mélange de mortier selon la revendication 13, **caractérisé en ce que** l'inhibiteur de polymérisation comprend un composé phénolique qui peut se lier à l'alumine de transition, de préférence un composé phénolique présentant au moins deux groupes hydroxyles, de manière particulièrement préférée l'hydroquinone et les dérivés d'hydroquinone, la benzoquinone, le pyrocatéchol et les dérivés de pyrocatéchol tels que le *tert-butyl* pyrocatéchol, le 4-méthyl pyrocatéchol, le 3,5-di-*tert*-butyl pyrocatéchol et le 3,4-dihydroxybenzaldéhyde, et des mélanges de ceux-ci.

15. Mélange de mortier selon l'une des revendications précédentes, **caractérisé en ce que** le composant durcisseur (B) est anhydre.

16. Mélange de mortier selon l'une des revendications précédentes, **caractérisé en ce que** le composant résine (A) est composé :
d'une résine durcissable sous l'action de radicaux dans une proportion de 5 à 45 % en poids ;
d'un diluant réactif dans une proportion de 0 à 25 % en poids ;
d'un accélérateur dans une proportion de 0 à 3 % en poids ;
d'un inhibiteur de polymérisation dans une proportion de 0 à 5 % en poids ; et
d'au moins un additif inorganique dans une proportion de 50 à 80 % en poids ;
la somme de toutes les proportions étant de 100 pour cent en poids, et l'additif inorganique comprenant au moins une alumine de transition présentant une granulométrie moyenne d50 d'au moins 7 µm et un diamètre de pore de 4 à 30 nm.

17. Mélange de mortier selon l'une des revendications précédentes, **caractérisé en ce que** le mélange de mortier susceptible d'être obtenu en mélangeant le composant résine (A) et le composant durcisseur (B) est composé :
d'une résine durcissable sous l'action de radicaux dans une proportion de 5 à 50 % en poids ;
d'un diluant réactif dans une proportion de 0 à 25 % en poids ;
d'un peroxyde organique dans une proportion de 0,5 à 5 % en poids ;
d'un accélérateur de polymérisation dans une proportion de 0 à 0,5 % en poids ;
d'au moins une alumine de transition dans une proportion de 2 à 20 % en poids ;
d'autres additifs inorganiques dans une proportion de 10 à 78 % en poids ; et d'eau dans une proportion de 0 à 10 % en poids ;
la somme de toutes les proportions du mélange étant de 100 % en poids.

18. Utilisation du mélange de mortier à deux composants selon l'une des revendications précédentes, pour la fixation chimique d'éléments tels que des tiges filetées d'ancrage, des barres d'armature, des manchons filetés et des vis, dans des trous de forage présents dans un matériau minéral.
